(19) Europäisches Patentamt
European Patent Office
Office européen des brevets

(11) Veröffentlichungsnummer: **0 032 184**
**B1**

(12) # EUROPÄISCHE PATENTSCHRIFT

(45) Veröffentlichungstag der Patentschrift: **12.09.84**

(51) Int. Cl.³: **C 22 B 60/02**

(21) Anmeldenummer: **80107364.4**

(22) Anmeldetag: **26.11.80**

(54) **Verfahren zur Gewinnung von Uran bzw. Uranverbindungen aus Phosphorsäure.**

(30) Priorität: **27.12.79 DE 2952475**

(43) Veröffentlichungstag der Anmeldung: **22.07.81 Patentblatt 81/29**

(45) Bekanntmachung des Hinweises auf die Patenterteilung: **12.09.84 Patentblatt 84/37**

(84) Benannte Vertragsstaaten: **AT BE DE FR GB IT NL SE**

(56) Entgegenhaltungen:
**EP - A - 0 032 184**
**FR - A - 2 070 722**
**US - A - 2 877 250**
**US - A - 3 214 239**
**US - A - 3 409 415**

**Chemical Abstracts Band 85, 1976, Columbus, Ohio, USA, I.A. SHEVCHUK et al. "Study of the extraction of uranium pyrophosphate complexes by solutions of alkylamines", Seite 515, Spalten 1 und 2, Abstract Nr. 131296d**
**VINITI (1977) 3840-77, Chem. Abstr. Band 90(1979), Nr. 14, Zusammenfassung 110731e**

(73) Patentinhaber: **Chemische Fabrik Budenheim Rudolf A. Oetker, Am Rhein 6, D-6501 Budenheim (DE)**
Patentinhaber: **Urangesellschaft mbH, Bleichstrasse 60-62, D-6000 Frankfurt/Main 1 (DE)**

(72) Erfinder: **Beitz, Klaus, Dr., Schillerstrasse 13, D-6501 Budenheim (DE)**
Erfinder: **Frankenfeld, Klaus, Dr., Mainzer Landstrasse 288, D-6257 Hünfelden (DE)**
Erfinder: **Lehmann, Rainer, Dr., Am Kirschberg 7, D-6477 Limeshain (DE)**
Erfinder: **Zintl, Inge, Rosmarthastrasse 21, D-6500 Mainz-Finthen (DE)**

(74) Vertreter: **Fischer, Ernst, Dr., c/o Metallgesellschaft AG Reuterweg 14, D-6000 Frankfurt am Main 1 (DE)**

**EP 0 032 184 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Flüssig/Flüssig-Extraktion von Uran aus Phosphorsäure mit Hilfe von Alkylaminpolyphosphat- und/oder -Metaphosphat-Verbindungen, gelöst in wasserunlöslichen organischen Lösungsmitteln, in Gegenwart von $Fe^{II}$-Ionen.

Zum Aufschluss von uranhaltigen Erzen werden u.a. Mineralsäuren verwendet, die nach dem Aufschlussprozess das Uran in gelöster Form enthalten. Es sind viele Anstrengungen unternommen worden, um das Uran aus solchen Säuren zu dem Zwecke der Urangewinnung zu entfernen.

Bei der Herstellung von Phosphorsäure nach dem sauren Aufschlussverfahren fallen bei der Verwendung von uranhaltigen Phosphaterzen ebenfalls uranhaltige Rohphosphorsäuren an. Für die Urangewinnung aus Phosphorsäure sind verschiedene Verfahren bekannt geworden, z.B. Extraktion von Uran mit Hilfe von Alkylpyrophosphatestern bzw. Extraktion mit Di(-2-äthylhexyl)-Phosphorsäure und Trioctylphosphinoxyd, wobei das letztere Verfahren besondere Bedeutung erlangt hat.

Die Urangewinnung aus Phosphorsäure hatte lange Zeit keine wirtschaftliche Bedeutung, weil die Urankonzentration sowohl in den Phosphaterzen als auch in den anfallenden Säuren zu gering war, als dass sie lohnend erschien.

Zur Urangewinnung fanden daher vorwiegend Verfahren Anwendung, die als Rohstoffe höher konzentrierte Uranerze verarbeiteten. Dabei wird u.a. das Uran durch die Behandlung des Erzes mit verdünnter Schwefelsäure, gegebenenfalls unter Mitverwendung eines Oxydationsmittels, aus dem Mineral gelöst und in die Schwefelsäure überführt; aus der verdünnten Säure wird das Uran durch andere Verfahrensschritte abgetrennt.

Eines dieser Abtrennverfahren stellt z.B. die Lösungsmittelextraktion des Urans mit Hilfe von höher molekularen Alkylaminen dar. So wird z.B. in der US-PS 2 877 250 ein Flüssig/Flüssig-Extraktionsverfahren zur Gewinnung von Uran aus wässerigen sauren Lösungen mit Aminen, gelöst in wasserunlöslichen nichtpolaren organischen Lösungsmitteln, beschrieben. Daraus geht hervor, dass eine gute Uran-Extraktion mit Aminen aus solchen Lösungen möglich ist, die eine niedrige bis mittlere Konzentration an Sulfat, Phosphat, Fluorid und Acetat und eine hohe Konzentration an Chlorid sowie eine hohe Konzentration an Nitrat bei mittlerem pH-Wert haben. Zum Beispiel wird aus einer 0,7 molaren Phosphorsäure (ca. 4,9% $P_2O_5$) nach dem bekannten Verfahren Uran in gewissem Umfang extrahiert, während aus einer 1,3 molaren Phosphorsäure (ca. 8,6% $P_2O_5$) kein Uran mehr gewonnen werden kann. Ebenso muss die Konzentration an Schwefelsäure kleiner als 1 molar (ca. 9,4% $H_2SO_4$) sein, um nennenswerte Mengen an Uran nach dem bekannten Verfahren gewinnen zu können.

Darüber hinaus ist in der US-PS 3 409 415 ein Verfahren beschrieben, um 3-wertige Lanthanide und Actinide aus sulfatfreien Lösungen mit organischen Säuren, ausgewählt aus der Gruppe der Monocarboxyl-, Polycarboxyl- und Aminpolycarboxylsäuren, mit Hilfe von wasserunmischbaren organischen Lösungen von hochmolekularen Aminen zu gewinnen. Der pH-Wert der Lösungen, aus denen die Metallionen extrahiert werden, liegt bei ca. 2,5 bis 10,3.

Aus Chemical Abstracts 85 1976 131 296d ist es bekannt, Uran mit primären Aminen in Gegenwart von Tetranatriumpyrophosphat zu extrahieren. Solch eine Extraktion erfolgt nicht aus stark saurer Lösung, sondern aus Lösungen mit einem pH-Wert von 5–7.

Auch aus «Chem. Abstr.» 90, 1979, S. 445 Ref. 110 731e ist das Extrahieren von Urantripolyphosphat-Komplexen mit in Chloroform gelösten langkettigen Alkylaminen bekannt. Dort handelt es sich nicht um phosphorsaure Ausgangslösungen, und ein Eisen-II-Zusatz ist nicht offenbart.

Bei den aus US-A-3 214 239 und FR-A-2 070 722 bekannten Extraktionsverfahren werden Ester der Phosphorsäure, Pyrophosphorsäure, Organophosphonsäuren oder Organophosphinsäuren eingesetzt. Eine Mitverwendung von Aminen ist nicht offenbart, und die Wirksamkeit der speziellen Extraktionsmittel muss durch Beseitigen von in der dreiwertigen Stufe vorliegendem Eisen herbeigeführt werden.

Die Verfahren zur Uranextraktion aus Phosphorsäure mit Hilfe von Alkylpyrophosphorsäureestern bzw. mit Di(-2-äthylhexyl)-Phosphorsäure und Trioctylphosphinoxid arbeiten in einem Säurekonzentrationsbereich von ca. 5,3 molar (d.h. ca. 30% $P_2O_5$).

Diese bekannten Verfahren haben jedoch den Nachteil, dass im Falle der Verwendung von Alkylpyrophosphorsäureestern ein hoher Chemikalienverbrauch durch die Unbeständigkeit des Reagenzes gegeben ist. Im Falle der Verwendung von Di(-2-äthylhexyl)-Phosphorsäure und Trioctylphosphinoxid wird das Verfahren einmal durch hohe finanzielle Aufwendungen für die Beschaffung des Reagenzes belastet, zum anderen sind umfangreiche Verfahrensschritte bei der Kreislaufführung der leichten Reagenzphase notwendig, um den kontinuierlichen Betrieb des Gesamtablaufes der Urangewinnung zu gewährleisten.

Es bestand daher ein Bedürfnis nach einem Verfahren, um Uran aus sauren Lösungen mit niedriger bis hoher Säurekonzentration gewinnen zu können.

Die Erfindung löst diese Aufgabe mit einem Verfahren zur Gewinnung von Uran aus wässriger, Uran in gelöster Form enthaltender Phosphorsäure mit Hilfe von Aminen, gelöst in wasserunlöslichen organischen Lösungsmitteln, in Gegenwart von Komplexbildnern. Bei einem Verfahren der genannten Art besteht die Erfindung darin, dass man die wässrige Phosphorsäure mit einer langkettigen Alkylamin-Polyphosphat- und/oder -Metaphosphat-Verbindung, gelöst in einem organischen Lösungsmittel, in Gegenwart von F-II-Ionen in Kontakt bringt, wobei das Alkylamin aus einem sekundären oder tertiären Alkylamin besteht und im Alkylrest 8 bis 30, vorzugsweise 8 bis 18 C-Atome enthält und der Formel

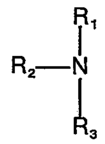

entspricht, wobei $R_1$ Wasserstoff oder Alkylradikale und $R_2$ und $R_3$ Alkylradikale bedeuten, der Polyphosphat- und/oder Metaphosphat-Rest 2 bis 10 000 P-Atome pro Molekül hat und geradkettig und/oder vernetztkettig bzw. ringförmig sein kann, und das Uran aus der wässrigen in die organische Phase überführt wird, aus der man das Uran reextrahiert.

Das vorliegende Patentbegehren schliesst einen Schutz für den Gegenstand der europäischen Patentanmeldung EP-A-0 031 460 aus.

Der Literatur ist zu entnehmen, dass die Extraktion des Urans aus Säurelösungen mit Hilfe von Alkylamin durch die Anwesenheit von grösseren Mengen Phosphationen gestört bzw. unterbunden wird. Deshalb haben die Alkylamine keine Verwendung für die Extraktion des Urans aus Phosphorsäure gefunden. Bei dem nassen Aufschlussverfahren der Phosphaterze mit Schwefelsäure fallen die Rohphosphorsäurelösungen üblicherweise mit einem $P_2O_5$-Gehalt von 30% an. Dies entspricht einer Phosphorsäurekonzentration von 4,2 Mol pro kg Rohsäure.

Es wurde nun überraschenderweise gefunden, dass sekundäre oder tertiäre Alkylamine in Verbindung mit Polyphosphat- und/oder Metaphosphationen und in Gegenwart von Fe-II-Ionen als hervorragende Reagenzien zur Extraktion des Urans aus Phosphorsäurelösungen verwendet werden können. Die zu extrahierende Phosphorsäure kann neben Fe-Ionen auch noch andere Kationen enthalten, ohne dass eine Einschränkung des Extraktionseffektes gegeben ist.

Die Extraktion des Urans aus Phosphorsäuren kann im Konzentrationsbereich zwischen 0,1 und ca. 8 Mol/kg der zu extrahierenden Säure (0,7% bis ca. 57% $P_2O_5$), vorzugsweise zwischen 1 bis ca. 6 Mol/kg zu extrahierender Säure (7% bis ca. 43% $P_2O_5$), durchgeführt werden. Die obere Konzentrationsgrenze der zu extrahierenden Phosphorsäure wird durch die Viskosität der Säure und deren Einflüsse auf die Durchführbarkeit der Extraktion begrenzt.

Ferner war für den Fachmann völlig überraschend, dass aus polyphosphathaltigen und/oder metaphosphathaltigen Phosphorsäuren das sekundäre oder tertiäre Alkylamin selektiv nur mit den Polyphosphationen und/oder Metaphosphationen reagiert und eine Verbindung bildet, die in mit Wasser und Phosphorsäure nicht mischbaren organischen Lösungsmitteln löslich ist. Diese Verbindung stellt das wirksame Reagenz zur Uranextraktion dar. Für einen Fachmann war es daher überraschend, dass Polyphosphat- und/oder Metaphosphationen in Verbindung mit sekundären oder tertiären Alkylaminen die Uranextraktion sogar aus hochprozentigen Phosphorsäuren in guter Ausbeute ermöglichen, während hingegen Mono-Phosphationen bereits in Konzentration von ca. > 1 molar die Uranextraktion in Verbindung mit sekundären oder tertiären Alkylaminen aus Säurelösungen verhindern.

Damit ist ein neuer technischer, völlig überraschender Tatbestand geschaffen.

Alkylamin-Polyphosphat und/oder -Metaphosphat kann während des Extraktionsverfahrens auf unterschiedliche Art gebildet werden. Es ist z.B. möglich, ein Alkali- und/oder Ammoniumsalz der Polyphosphorsäure und/oder Metaphosphorsäure in der zu behandelnden Mineralsäure zu lösen, wobei sich die entsprechende freie Polyphosphorsäure und/oder Metaphosphorsäure bildet, die dann von dem zugesetzten sekundären oder tertiären Alkylamin aufgenommen wird und das Extraktionsmittel darstellt. Es ist auch möglich, anstelle eines Salzes die freie Poly- und/oder Metaphosphorsäure zu verwenden, wie sie z.B. beim Eindampfen von Orthophosphorsäure entstehen.

Ferner ist es möglich, die Polyphosphorsäure und/oder Metaphosphorsäure durch Behandlung einer wässerigen Alkali- und/oder Ammoniumpolyphosphat- und/oder -Metaphosphatlösung mit einem Kationenaustauscherharz gesondert herzustellen und das Eluat direkt in die organische Lösung aus sekundärem oder tertiärem Alkylamin und Lösungsmittel einzuleiten. Dabei bilden sich 2 Phasen aus, wobei die Polyphosphorsäure und/oder Metaphosphorsäure in die organische Phase wandert und mit dem sekundären oder tertiären Alkylamin die wirksame Verbindung bildet. Die schwere Phase besteht aus einer wässerigen Lösung von überschüssiger Polyphosphorsäure und/oder Metaphosphorsäure, die abgetrennt wird. Diese Arbeitsweise ist insbesondere für ein späteres kontinuierliches Gegenstrom-Extraktionsverfahren vorteilhaft.

Als Alkylamine können bei dem erfindungsgemässen Verfahren sekundäre, tertiäre Amine als auch deren Mischungen eingesetzt werden.

Manche sekundäre oder tertiäre Amine können allerdings bei ihrer Verwendbarkeit für die Extraktion des Urans aus Phosphorsäure einer Einschränkung unterliegen. Sie können nämlich als Amin-Polyphosphat und/oder -Metaphosphat-Verbindung bei der Extraktion eine dritte Phase bilden, so dass sich ein geordneter Verlauf des beanspruchten Verfahrens nur unter Zuhilfenahme von weiteren Massnahmen empfiehlt.

Die Bildung einer dritten Phase kann verhindert werden, wenn man zu der organischen Phase aus Aminpolyphosphat und/oder -Metaphosphat und organischem Lösungsmittel zusätzlich andere organische Stoffe mit lösungsvermittelnden Eigenschaften wie z.B. n-Octanol, iso-Decanol, Reaktionsgemische aus der Oxysynthese im Bereich von $C_8$ bis $C_{12}$, Cyclohexanon oder Tridecanol zusetzt. Schwierigkeiten bei der Extraktion selbst

treten dadurch nicht auf. In einem kontinuierlichen Verfahrensablauf mit Rückextraktion des Urans und Rückgewinnung des Lösungsmittels bedeutet der Zusatz eines Lösungsvermittlers jedoch eine beträchtliche Komplizierung infolge der Veränderung der Verteilungsgleichgewichte zwischen den Phasen.

Die für das erfindungsgemässe Verfahren brauchbaren sekundären oder tertiären Alkylamine sollen darüber hinaus mit Wasser und Phosphorsäure nicht mischbar sein. Bei hoher Löslichkeit des sekundären oder tertiären Alkylamins tritt nämlich Aminverlust und Kontaminierung der wässerigen mineralsauren Phase mit Amin ein. Die Löslichkeit der sekundären oder tertiären Alkylamine in Wasser und Phosphorsäure sollte $< 1\%$ sein.

Die folgende Tabelle gibt Aufschluss über die Löslichkeit in Wasser der verschiedenen sekundären und tertiären Alkylamine bei 20 °C:

Amine:
1) Isotridecylamin
2) Di-sek.-butylamin
3) Tri-n-octylamin
4) Tri-iso-octylamin
5) Tri-iso-nonylamin
6) Tri-iso-decylamin
7) Tri-dodecylamin

| Amin | 1 | 2 | 3 | 4 | 5 | 6 | 7 |
|---|---|---|---|---|---|---|---|
| 1) Löslichkeit der Amine in $H_2O$ (%) | 0,1 | 0,7 | 0,04 | 0,1 | 0,3 | 0,05 | 0,1 |

Bei der praktischen Durchführung des erfindungsgemässen Verfahrens ist das Verhalten des Amin-organisches Lösungsmittel- bzw. das Amin-Polyphosphat- und/oder -Metaphosphat-organisches Lösungsmittel-Systems gegenüber der wässerigen Phase von Bedeutung für die Auswahl des brauchbaren sekundären oder tertiären Amins.

Die sekundären und tertiären Amine mit einer Kohlenstoffatomanzahl in dem Alkylrest von 8 bis 30, insbesondere zwischen 8 und 18, sind in dem erfindungsgemässen Verfahren verwendbar. Als besonders brauchbar haben sich z.B. die langkettigen Amine iso-Tridecylamin, Tri-iso-Octylamin, Tri-iso-Decylamin, Tri-dodecylamin, Di-Laurylamin und Di-iso-octa-decylamin erwiesen, wobei nicht nur die reinen Amine, sondern auch technische Aminmischungen brauchbar sind.

Die sekundären und tertiären Amine sind hochviskose Stoffe und deshalb in dem erfindungsgemässen Extraktionsverfahren schlecht zu handhaben. Zweckmässigerweise werden sie in organischen Lösungsmitteln gelöst. Diese organischen Lösungsmittel müssen folgende Bedingungen erfüllen: Sie dürfen nicht mit Wasser und Phosphorsäure mischbar sein bzw. Wasser und Phosphorsäure aufnehmen. Diese Bedingungen für das organische Lösungsmittel gelten sinngemäss auch gegenüber der wässerig-alkalischen Phase bei der Rückextraktion des Urans aus der organischen Phase.

Die organischen Lösungsmittel müssen weiterhin eine gute Löslichkeit für die sekundären und tertiären Alkylamine und die Aminpolyphosphate und/oder -Metaphosphate und das extrahierte Uran aufweisen, dürfen mit diesen aber selbst nicht reagieren.

Als besonders brauchbar haben sich bei dem erfindungsgemässen Verfahren als Lösungsmittel folgende Gruppen erwiesen:

a) aliphatische und aromatische Kohlenwasserstoffe in Form von definierten Verbindungen, Mischungen oder Destillationsfraktionen
b) chlorierte Kohlenwasserstoffe,
c) Äther, Ketone, Ester, soweit sie die obengenannten Bedingungen erfüllen.

Als brauchbare Polyphosphat- und/oder Metaphosphat-Komponenten zur Herstellung der Amin-Poly-Phosphate und/oder -Metaphosphate haben sich folgende Stoffe erwiesen:

Di-Phosphorsäure
Tri-Phosphorsäure
Tetra-Phosphorsäure
mittel- bis langkettige Polyphosphorsäure
vernetztkettige Polyphosphorsäure, hergestellt aus Kurrol'schem Salz
Tri-Metaphosphorsäure
Tetra-Metaphosphorsäure

sowie Mischungen davon, wie sie z.B. beim Aufkonzentrieren von Monophosphorsäure entstehen.

Diese Poly- und/oder Metaphosphorsäuren bilden mit den beschriebenen sekundären und tertiären Alkylaminen Verbindungen, die in den beschriebenen Lösungsmitteln löslich sind, und das Extraktionsmittel für das erfindungsgemässe Verfahren darstellen.

Die Extraktionswirkung der einzelnen Alkylaminpoly- und/oder -Metaphosphate für Uran aus Phosphorsäure ist unterschiedlich.

Die unterschiedliche Extraktionswirkung der einzelnen Polyphosphat- und/oder Metaphosphataminverbindungen wird am Beispiel einer vorgereinigten nordafrikanischen Rohphosphorsäure mit 30% $P_2O_5$ dargestellt. Diese vorgereinigte Rohphosphorsäure hat folgende auf 100% $P_2O_5$ bezogene Zusammensetzung:

| | |
|---|---|
| U | 0,035% |
| Mg | 1,51 % |
| Ca | 0,46 % |
| Fe | 0,56 % |
| Al | 0,60 % |
| Cr | 0,075% |
| V | 0,062% |
| Ti | 0,019% |

Die folgende Tabelle gibt die Versuchsergebnisse wieder, die bei einer einstufigen Extraktion der obengenannten Rohphosphorsäure mit den verschiedenen Alkylaminpolyphosphat- und/oder Alkylaminmetaphosphat-Verbindungen unter vergleichbaren Bedingungen gewonnen wurden.

| Alkylamin | extrahierte U-Menge % vom Einsatz |
|---|---|
| 1) ohne Polyphosphat | 3 |
| 2) Diphosphorsäure | 12 |
| 3) Triphosphorsäure | 62 |
| 4) Tetrapolyphosphorsäure | 88 |
| 5) langkettige Polyphosphorsäure | 92 |
| 6) vernetztkettige Polyphosphorsäure | 85 |
| 7) Mischung von 5) und 6) im Verhältnis 1:1 | 94 |
| 8) Trimetaphosphorsäure | 32 |

Aus den Ergebnissen geht hervor, dass diejenigen Amin-Polyphosphatverbindungen für die Extraktion von Uran aus Phosphorsäure am besten geeignet sind, die ein langkettiges und/oder vernetztkettiges Polyphosphation enthalten.

Die Konzentration der Phosphorsäure hat ebenfalls einen gewissen Einfluss auf die Extrahierbarkeit des Urans nach dem erfindungsgemässen Verfahren, wobei aber keine prinzipielle Einschränkung hinsichtlich der Durchführbarkeit des erfindungsgemässen Verfahrens gegeben ist.

Die nachstehende Versuchsreihe gibt einen Überblick sowohl über den Einfluss der $P_2O_5$-Konzentration als auch über die unterschiedlichen Säurearten. Für diese Versuchsreihe wurden folgende Rohsäuren im Konzentrationsbereich von 10–50% $P_2O_5$ eingesetzt:

1. Rohsäure aus Togo-Phosphaterz:
   0,029% U /100% $P_2O_5$
   1,96 % Fe /100% $P_2O_5$
2. Rohsäure aus Marokko-Phosphaterz:
   0,035% U /100% $P_2O_5$
   0,56 % Fe /100% $P_2O_5$
3. Rohsäure aus Florida-Phosphaterz:
   0,042% U /100% $P_2O_5$
   2,3 % Fe /100% $P_2O_5$

Als Extraktionsmittel wurde ein Alkylamin-Polyphosphat verwendet, dessen Polyphosphat-Rest einen Polymerisationsgrad von n – 30 hatte. Die Extraktionsversuche wurden einstufig im Phasenverhältnis (Gewichts-Verhältnis) 1 : 1 bei 20 °C durchgeführt.

Die Ergebnisse sind in der folgenden Tabelle zusammengefasst:

| Säure-Konzentration % $P_2O_5$ | Rohphosphorsäure aus Togo | Marokko | Florida |
|---|---|---|---|
| | extrahierte Uran-Menge % vom Einsatz | | |
| 10 | 60 | 39 | 58 |
| 20 | 89 | 85 | 82 |
| 25 | 76 | 76 | 91 |
| 30 | 84 | 92 | 90 |
| 35 | 74 | 73 | 64 |
| 40 | 63 | 63 | 25 |
| 45 | 46 | 26 | 6 |
| 50 | 25 | 8 | 3 |

Die Extrahierbarkeit des Urans aus den verschiedenen Rohphosphorsäuren ist unterschiedlich. Die Ursache dafür wurde in der unterschiedlichen Art und Menge der darin jeweils enthaltenen Fremd-Kationen gefunden.

Der Einfluss der verschiedenen Fremd-Kationen auf die Extrahierbarkeit des Urans aus Phosphorsäure stellt sich im Reinsäuresystem bei Verwendung eines Aminpolyphosphates mit 30 P-Atomen wie folgt dar:

| Fremdkationen Art | Konzentration | extrahierte U-Menge % vom Einsatz |
|---|---|---|
| ohne | – | 74 |
| Na | 0,5 | 75 |
| K | 0,5 | 85 |
| Mg | 0,5 | 30 |
| Ca | 0,5 | 11 |
| Al | 0,5 | 12 |
| $Fe^{II}$ | 0,5 | 95 |
| $Fe^{III}$ | 0,5 | 9 |
| $Cr^{III}$ | 0,5 | 35 |
| $Cu^{II}$ | 0,5 | 38 |
| Zn | 0,5 | 50 |
| $Mn^{II}$ | 0,5 | 34 |
| $Ti^{IV}$ | 0,1 | 11 |

Die Anwesenheit von Eisen-II-Ionen ergibt den besten Extraktionseffekt für das Uran.

Der negative Einfluss der Fremd-Kationen auf die Extrahierbarkeit von Uran aus Phosphorsäure kann in allen Fällen durch Zusatz von $Fe^{II}$-Ionen aufgehoben werden, wie die folgende Tabelle zeigt:

| Fremdkationen Art | Konzentration | Zusatz von $Fe^{II}$ in % | extrahierte Menge Uran in % vom Einsatz |
|---|---|---|---|
| ohne | – | 0,5 | 95 |
| Na | 0,5 | 0,5 | 97 |
| K | 0,5 | 0,5 | 97 |
| Mg | 0,5 | 0,5 | 97 |
| Ca | 0,5 | 0,5 | 97 |
| Al | 0,5 | 0,5 | 97 |
| $Cr^{III}$ | 0,5 | 0,5 | 97 |
| $Cu^{II}$ | 0,5 | 0,5 | 97 |
| Zn | 0,5 | 0,5 | 97 |
| $Mn^{II}$ | 0,5 | 0,5 | 97 |
| $Ti^{IV}$ | 0,1 | 0,5 | 95 |

Die Verbesserung der Extrahierbarkeit von Uran aus Phosphorsäure durch Zusatz von $Fe^{II}$-Ionen wird bei Verwendung der unterschiedlichen Amin-Polyphosphate und/oder -Metaphosphate als Extraktionsmittel erreicht, wie es sich aus der folgenden Tabelle ergibt:

| Amin-Polyphosphate | extrahierte U-Menge (% vom Einsatz) ohne $Fe^{II}$-Ionen | Zusatz von 0,5% $Fe^{II}$-Ionen |
|---|---|---|
| 1) – | 4 | 9 |
| 2) Diphosphat | 10 | 25 |
| 3) Triphosphat | 29 | 75 |
| 4) Trimetaphosphat | 12 | 25 |
| 5) Tetraphosphat | 35 | 94 |
| 6) langkettiges Polyphosphat | 74 | 98 |
| 7) vernetztes Polyphosphat | 64 | 98 |
| 8) Mischung aus Nr. 6 und 7 1:1 | 72 | 98 |

Es hat sich gezeigt, dass eine bestimmte Menge an Fe-II-Ionen, bezogen auf die in der Phosphorsäure vorhandene Uranmenge, notwendig ist, um eine optimale Gewinnung des Urans aus der Phosphorsäure zu erreichen.

Der Einfluss der Fe-II-Ionen-Menge auf die Extrahierbarkeit des Urans aus einer uranhaltigen Reinphosphorsäure mit 30% $P_2O_5$ ergibt sich für verschieden hohen Urangehalt in der Phosphorsäure, bei einer einstufigen Extraktion im Phasenverhältnis 1 : 1 (Gewichtsteile) mit einer 2,5%igen Tridodecylaminpolyphosphat-Kerosin-Lösung aus der nachstehenden Tabelle:

| U-Menge in der Phosphorsäure (ppm) | 200 | | | 500 | | | 1000 | | |
|---|---|---|---|---|---|---|---|---|---|
| Zusatz an Fe-II-Ionen (%), bezogen auf die Phosphorsäure | 0,01 | 0,02 | 0,04 | 0,025 | 0,05 | 0,10 | 0,05 | 0,10 | 0,20 |
| Extrahierte U-Menge (% v. Einsatz) | 62 | 77 | 82 | 65 | 75 | 98 | 62 | 94 | 96 |

Für das erfindungsgemässe Verfahren ist zur Erzielung einer optimalen Uranabreicherung eine ausreichend grosse Menge an Fe-II-Ionen erforderlich, die bei einer einstufig-gleichphasigen Extraktion mindestens in der gleichen Gewichtsmenge wie das in der Phosphorsäure vorhandene Uran liegen sollte. Bei der Veränderung der Extraktionsbedingungen kann sich der Fe-II-Ionen-Bedarf nach grösseren oder kleinere Mengen hin verschieben.

Es ist nicht bekannt, ob das Eisen in den verschiedenen Rohphosphorsäuren in der 2- oder 3-wertigen Form vorliegt.

Wenn man gezielt das in den Rohphosphorsäuren vorhandene Eisen in die 3-wertige Form überführt und die Extraktion des Urans mit Aminpolyphosphat durchführt, dann wird das Extraktionsergebnis sehr stark verschlechtert.

Bei der Zugabe von Reduktionsmitteln in ausreichender Menge zur Überführung der in den Rohsäuren vorhandenen $Fe^{III}$-Ionen in die 2-wertige Form wird hingegen ein sehr gutes Extraktionsergebnis erzielt.

Für die einzelnen typischen Rohphosphorsäuren lässt sich der Einfluss der Wertigkeit des Eisens auf die Extraktion des Urans mit Alkylaminpolyphosphat bei den verschiedenen Säurekonzentrationen wie folgt darstellen:

Rohphosphorsäure aus Togo

| Säurekonzentration % $P_2O_5$ | originale Form | mit $Fe^{III}$-Ionen | mit $Fe^{II}$-Ionen |
|---|---|---|---|
| | extrahierte U-Menge (% vom Einsatz) | | |
| 10 | 60 | 37 | 97 |
| 20 | 89 | 22 | 88 |
| 25 | 76 | 13 | 88 |
| 30 | 84 | 5 | 95 |
| 35 | 74 | 6 | 82 |
| 40 | 63 | 3 | 70 |
| 45 | 46 | 3 | 47 |
| 50 | 25 | 6 | 25 |

Rohsäure aus Marokko

| Säurekonzentration % $P_2O_5$ | originale Form | mit $Fe^{III}$-Ionen | mit $Fe^{II}$-Ionen |
|---|---|---|---|
| | extrahierte U-Menge (% vom Einsatz) | | |
| 10 | 39 | 37 | 98 |
| 20 | 85 | 24 | 98 |
| 25 | 76 | 15 | 98 |
| 30 | 92 | 13 | 95 |
| 35 | 73 | 8 | 75 |
| 40 | 63 | 4 | 68 |
| 45 | 26 | 2 | 29 |
| 50 | 8 | 2 | 9 |

Rohsäure aus Florida

| Säurekonzentration % $P_2O_5$ | originale Form | mit $Fe^{III}$-Ionen | mit $Fe^{II}$-Ionen |
|---|---|---|---|
| | extrahierte U-Menge (% vom Einsatz) | | |
| 10 | 58 | 41 | 98 |
| 20 | 82 | 25 | 88 |
| 25 | 91 | 11 | 97 |
| 30 | 90 | 16 | 96 |
| 35 | 64 | 11 | 65 |
| 40 | 25 | 13 | 30 |
| 45 | 6 | 8 | 10 |
| 50 | 3 | 2 | 4 |

Die Extraktion des Urans mit Alkylaminpolyphosphaten und/oder -Metaphosphaten aus Phosphorsäure, in denen neben Uran noch andere Kationen in gelöster Form enthalten sind, wird durch die Anwesenheit von $Fe^{II}$-Ionen signifikant verbessert.

Das beanspruchte Verfahren muss jeweils der Art der Phosphorsäure, aus der Uran extrahiert werden soll, angepasst werden. Das Verfahren kann variiert werden durch unterschiedliche Konzentration des sekundären oder tertiären Alkylamins in der organischen Phase, durch unterschiedliches Phasenverhältnis von organischer zu anorganischer Phase sowie durch die Anzahl der Extraktionsstufen und die Menge von $Fe^{II}$-Ionen in der Phosphorsäure.

Es hat sich herausgestellt, dass es vorteilhaft ist, die Konzentration des sekundären oder tertiären Alkylamins in dem Lösungsmittel in den Grenzen 0,1–10 Gew.-% zu halten. Das Phasenverhältnis von organischer zu anorganischer Phase ist ebenfalls keine kritische Grösse und kann in den Grenzen von z.B. 1 : 4 bis 4 : 1 schwanken, wobei diese Grenzen jederzeit nach beiden Seiten hin überschritten werden können.

In der Praxis wird das erfindungsgemässe Extraktionsverfahren als mehrstufiges Gegenstromextraktionsverfahren betrieben. Die Anzahl der erforderlichen Stufen ist von der Art des verwendeten Alkylamin-Polyphosphats und/oder -Metaphosphats und der Konzentration und Art der Phosphorsäure abhängig. Praktische Versuche haben gezeigt, dass 3–8 Extraktionsstufen ausreichend sind, um eine vollständige Extraktion des Urans zu erreichen.

Wenn Uran aus Rohphosphorsäuren extrahiert werden soll, die einen hohen Gehalt an organischen Stoffen aufweisen, sollen die organischen Stoffe in einem vorgeschalteten Reinigungsprozess z.B. durch Behandlung der Säure mit Adsorptionsmitteln wie Aktiv-Kohle oder Entfärbungserden oder durch Behandlung mit nicht mischbaren organischen Lösungsmitteln wie z.B. Dieselöl minimiert werden, da andernfalls die organischen Stoffe leicht zur Emulsionsbildung Anlass geben und das Extraktionsverfahren empfindlich stören.

Die bei dem erfindungsgemässen Verfahren verwendeten Alkylamin-Polyphosphate und/oder -Metaphosphate sind hochmolekulare Stoffe, deren Molekulargewicht zwischen ca. 300 und ca. 4 300 000, vorzugsweise zwischen 1000 und 70 000, liegen kann. Bei der Verwendung einer langkettigen Polyphosphorsäure mit einem Polymerisationsgrad von n = 30 und einem sekundären oder tertiären Alkylamin mit 36 C-Atomen ergeben sich Verbindungen mit einem Molekulargewicht von ca. 13 000, wobei das molare N : P-Verhältnis ca. 1 : 1 beträgt. Werden andere Ausgangsstoffe zur Bildung des Extraktionsmittels im Rahmen des erfindungsgemässen Verfahrens gewählt, dann schwankt das molare N : P-Verhältnis in den Grenzen von 1 : 2 bis 2 : 1.

Die Extraktionsmittel können auf unterschiedliche Art und Weise gebildet werden, und zwar können erstens die Polyphosphat- und/oder Metaphospathionen in Form von Salzen oder als freie Säuren der uranhaltigen Phosphorsäure zugesetzt werden. Das erforderliche sekundäre oder tertiäre Alkylamin wird, gelöst in einem wasserunlöslichen organischen Lösungsmittel, in das Extraktionssystem eingebracht. Das sekundäre oder tertiäre gelöste Alkylamin nimmt die Polyphosphat- und/oder Metaphosphationen aus der anorganischen Phase unter Bildung des Extraktionsmittels auf. Das Uran wir aus der anorganischen Phase durch das Extraktionsmittel in die organische Phase überführt. Aus der organischen Phase wird das Uran in bekannter Weise reextrahiert.

Zweitens kann die Herstellung des Extraktionsmittels in einem separaten Verfahrensschritt erfolgen.

Diese Arbeitsweise ist zweckmässig, wenn das erfindungsgemässe Verfahren als kontinuierliches Gegenstromextraktionsverfahren betrieben wird. In diesem Falle lässt man das sekundäre oder tertiäre Amin, gelöst in einem wasserunlöslichen organischen Lösungsmittel, mit freier Poly- und/oder Metaphosphorsäure reagieren. Die feie Poly- und/oder Metaphosphorsäure kann sowohl als verdünnte wässerige Lösung als auch in hochkonzentrierter Form zugegeben werden. Sie kann z.B. durch Ionenaustausch aus den Polyphosphat-und/oder Metaphosphatsalzlösungen hergestellt werden.

Dabei bilden sich zwei getrennte Flüssigkeitsphasen aus. Die organische Phase besteht aus dem organischen Lösungsmittel und dem gebildeten Alkylaminpolyphosphat und/oder Alkylaminmetaphosphat.

Die wässerige Phase enthält gegebenenfalls den Überschuss an freien Poly- und/oder Metaphosphorsäuren. Die wässerige Phase wird abgetrennt.

In bekannten Extraktionsapparaten wird die organische Phase, bestehend aus Alkylaminpolyphosphat und/oder Alkylaminmetaphosphat, gelöst in einem organischen Lösungsmittel, mit der uranhaltigen Phosphorsäure, die die anorganische Phase darstellt, in Kontakt gebracht. Das Uran wird von der organischen Phase aufgenommen.

Es ist auch möglich, die reine Aminpolyphosphat- und/oder -Metaphosphatverbindung zu dem organischen Lösungsmittel zuzugeben und in dieser Form bei dem erfindungsgemässen Verfahren zu verwenden.

Die von Uran befreite Phosphorsäure enthält weder sekundäre oder tertiäre Alkylamine noch organische Lösungsmittel, da diese nicht in die wässerige Phase wandern. Die Phosphorsäure kann als solche bzw. zur Weiterverarbeitung auf ihre Salze verwendet oder anderen weitergehenden Reinigungsprozessen zugeführt werden.

Das erfindungsgemässe Verfahren wird üblicherweise bei Raumtemperatur durchgeführt. Es kann auch bei anderen Temperaturen betrieben werden, wobei die Grenzen nach unten durch den Anstieg der Viskosität in den Phasen und nach oben durch den Siedepunkt des organischen Lösungsmittels gegeben sind.

Die uranhaltige organische Phase wird mit einer wässerigen alkalisch reagierenden Lösung behandelt. Dadurch wird das Extraktionsmittel in die beiden Komponenten aufgespalten. Das dabei gebildete Alkalipolyphosphat und/oder -Metaphosphat und das Uran wandern in die wässerige alkalische Phase. Das sekundäre oder tertiäre Alkylamin verbleibt als freie Base in der organischen Phase. Diese wird erneut dem Extraktionsprozess für die Uranabtrennung aus der Phosphorsäure zugeführt. Aus der wässerigen alkalischen Phase wird das Uran in bekannter Weise abgetrennt.

Der Verfahrensschritt der Rückextraktion des Urans aus der organischen Phase in die wässerige alkalische Phase kann chargenweise, mehrfach einstufig, oder auch als Gegenstromextraktion betrieben werden.

Beispiel 1

Eine grössere Menge an Rohphosphorsäure, die nach dem Nassverfahren aus marokkanischem Phosphaterz hergestellt worden war, wurde durch langzeitliche Dekantation und A-Kohle-Behandlung sowohl von den Feststoffen als auch von organischen Verunreinigungen befreit. Die erhaltene blanke grüne Rohsäure enthielt:

29,9 % $P_2O_5$
1,4 % $H_2SO_4$
1,6 % HF
0,16 % Fe
0,0135% U

Von diesem Rohphosphorsäurevorrat aus wurde über einen Zeitraum von 45 Tagen kontinuierlich eine vierstufige Flüssig/Flüssig-Gegenstromextraktion zur Entfernung des Urans der Phosphorsäure betrieben. Die Extraktionsanlage bestand aus einer hintereinandergeschalteten Mixer-Settler-Anordnung.

Die Gegenstromextraktionsanlage wurde mit einer Rohsäuremenge 2,9 kg/h aus einem Vorlagetank gespeist. Die Säure des Vorlagetanks war zuvor mit 0,18% $Na_2SO_3$ versetzt worden, um das vorhandene Eisen der Rohsäure in die zweiwertige Form zu überführen. Die Gegenstromextraktionsanlage wurde im Phasenverhältnis 1 : 3 Gewichtsteile organische Phase zu anorganischer Phase betrieben.

Die eingespeiste Menge an organischer Phase betrug 0,97 kg/h. Sie hatte die Zusammensetzung:
97,8% Naphthabenzin Sdp. 140 °C
2,2% Tridodecylaminpolyphosphat.

Die organische Phase wurde in einer separaten Mixer-Settler-Apparatur kontinuierlich hergestellt, indem der Rückstrom des im Verfahren umlaufenden Lösungsmittel-Tridodecylamin-Gemisches mit einer überschüssigen Menge einer kontinuierlich hergestellten wässerigen Lösung von langkettiger Polyphosphorsäure mit ca. 30 P-Gliedern umgesetzt wurde, wobei die wässerige Lösung der langkettigen Polyphosphorsäure durch Behandlung einer verdünnten Natriumpolyphosphatlösung mit einem stark sauren Ionenaustauscher in der $H^+$-Form gewonnen worden war. Dabei bildeten sich zwei Phasen aus, von denen die wässerige Phase die überschüssige Polyphosphorsäure enthielt und abgetrennt wurde.

Im Verlauf der vierstufigen Gegenstromextraktion erfolgte die Abreicherung des Urans aus der Rohphosphorsäure. Nach den einzelnen Extraktionsstufen stellte sich in der Rohphosphorsäure folgende U-Konzentration ein:

| | |
|---|---|
| Zulauf Rohsäure | 0,0135% |
| nach 1. Extraktionsstufe | 0,0032% |
| nach 2. Extraktionsstufe | 0,0006% |
| nach 3. Extraktionsstufe | 0,0002% |
| nach 4. Extraktionsstufe | <0,0002% |

Die aus der Gegenstromextraktion ablaufende uranfreie Rohphosphorsäure war in ihrer Konzentration unverändert. Eine Kontaminierung der Rohsäure mit dem Lösungsmittel oder Alkylamin konnte nicht nachgewiesen werden. Die Rohphosphorsäure wurde auf andere Produkte weiterverarbeitet. Die Ausbeute an extrahiertem Uran aus der Rohphosphorsäure betrug 99%.

Die aus der Phosphorsäure-Gegenstrom-Extraktionsanlage ablaufende organische Phase wurde in eine zweite Gegenstromextraktionsanlage überführt und dort mit einer wässerigen 5%igen $Na_2CO_3$-Lösung behandelt. Die zweite Extraktionsanlage wurde dreistufig betrieben. Das

Phasenverhältnis war 4 : 1 Gewichtsteile organischer Phase zu anorganischer Phase.

Die in die Gegenstromextraktion einlaufenden Mengen betrugen:

| | |
|---|---|
| organische Phase | 0,970 kg/h |
| anorganische Phase | 0,242 kg/h |

Die aus der Extraktion ablaufenden Mengen betrugen:

| | |
|---|---|
| organische Phase | 0,966 kg/h |
| anorganische Phase | 0,246 kg/h |

Während des Extraktionsprozesses erfolgte eine Spaltung der Tridodecylaminpolyphosphatverbindung in die freie Base, die in der organischen Phase verbleibt und die Polyphosphationen, die zusammen mit Uran in die wässerige Sodaphase wanderten.

Bei der Durchführung der Gegenstromextraktion stellten sich in den wässerigen Sodaphasen der einzelnen Extraktionsstufen folgende Uran-Pegel ein, wobei der Zulauf der uranhaltigen organischen Phase in die Extraktionsstufe 1 und der Zulauf der anorganischen Sodaphase in die Extraktionsstufe 3 erfolgte:

| | |
|---|---|
| nach 1. Extraktionsstufe | 0,158 % |
| nach 2. Extraktionsstufe | 0,0015% |
| nach 3. Extraktionsstufe | 0,0002% |

Die ablaufende filtrierte Sodaphase enthielt 0,186% $U_3O_8$.

Sie wurde durch Fällung mit NaOH auf ein Urankonzentrat weiterverarbeitet.

Beispiel 2

Eine Rohphosphorsäure, die nach dem Nassverfahren aus Togo-Phosphaterz hergestellt worden war, wurde durch ein Reinigungsverfahren sowohl von den Feststoffen als auch von organischen Verunreinigungen befreit. Die erhaltene blanke grüne Rohsäure enthielt:

| | |
|---|---|
| 31,4 % | $P_2O_5$ |
| 1,2 % | $H_2SO_4$ |
| 0,6 % | HF |
| 0,64 % | Fe |
| 0,0092% | U |

Über einen Zeitraum von 10 Tagen wurde kontinuierlich eine achtstufige Flüssig/Flüssig-Gegenstromextraktion zur Entfernung des Urans der Phosphorsäure betrieben. Die Extraktionsanlage bestand aus einer hintereinandergeschalteten Mixer-Settler-Anordnung.

Die Gegenstromextraktionsanlage wurde mit einer Rohsäuremenge 3,2 kg/h aus einem Vorlagetank gespeist. Die Säure des Vorlagetanks war zuvor mit 0,72% $Na_2SO_3$ versetzt worden, um das vorhandene Eisen der Rohsäure in die zweiwertige Form zu überführen. Die Gegenstromextraktionsanlage wurde im Phasenverhältnis 1 : 3 (Gewichtsteile) organische Phase zu anorganischer Phase betrieben.

Die eingespeiste Menge an organischer Phase betrug 1,07 kg/h.

Sie hatte die Zusammensetzung

97,8% Kerosin Sdp. 250–300 °C

2,2% Iridodecylamintrimetaphosphat.

Die organische Phase wurde in einer separaten Mixer-Settler-Apparatur kontinuierlich hergestellt, indem der Rückstrom des im Verfahren umlaufenden Lösungsmittel-Tridodecylamin-Gemisches mit einer überschüssigen Menge einer kontinuierlich hergestellten wässrigen Lösung von Trimetaphosphorsäure umgesetzt wurde, wobei die wässrige Lösung der Trimetaphosphorsäure durch Behandlung einer verdünnten Natriumtrimetaphosphatlösung mit einem stark sauren Ionenaustauscher in der $H^+$-Form gewonnen worden war. Dabei bildeten sich zwei Phasen aus, von denen die wässrige Phase überschüssige Trimetaphosphorsäure enthielt und abgetrennt wurde.

Im Verlauf der achtstufigen Gegenstromextraktion erfolgte die Abreicherung des Urans aus der Rohphosphorsäure. Nach den einzelnen Extraktionsstufen stellte sich in der Rohphosphorsäure folgende U-Konzentration ein:

| | |
|---|---|
| Zulauf Rohsäure | 0,0092% |
| nach 1. Extraktionsstufe | 0,0060% |
| nach 2. Extraktionsstufe | 0,0040% |
| nach 3. Extraktionsstufe | 0,0025% |
| nach 4. Extraktionsstufe | 0,0017% |
| nach 5. Extraktionsstufe | 0,0011% |
| nach 6. Extraktionsstufe | 0,0007% |
| nach 7. Extraktionsstufe | 0,0005% |
| nach 8. Extraktionsstufe | 0,0003% |

Die aus der Gegenstromextraktion ablaufende uranfreie Rohphosphorsäure war in ihrer Konzentration unverändert. Eine Kontaminierung der Rohsäure mit dem Lösungsmittel oder Alkylamin konnte nicht nachgewiesen werden. Die Rohphosphorsäure wurde auf andere Produkte weiterverarbeitet. Die Ausbeute an extrahiertem Uran aus der Rohphosphorsäure betrug 97%.

Die aus der Phosphorsäure-Gegenstrom-Extraktionsanlage ablaufende organische Phase wurde in eine zweite Gegenstromextraktionsanlage überführt und dort mit einer wässrigen 5%igen $Na_2CO_3$-Lösung behandelt. Die zweite Extraktionsanlage wurde dreistufig betrieben. Das Phasenverhältnis war 5 : 1 (Gewichtsteile) organischer Phase zu anorganischer Phase.

Die in die Gegenstromextraktion einlaufenden Mengen betrugen:

| | |
|---|---|
| organische Phase | 1,07 kg/h |
| anorganische Phase | 0,214 kg/h. |

Die aus der Extraktion ablaufenden Mengen betrugen:

| | |
|---|---|
| organische Phase | 1,03 kg/h |
| anorganische Phase | 0,218 kg/h. |

Während des Extraktionsprozesses erfolgte eine Spaltung der Tridodecylamintrimetaphosphatverbindung in die freie Base, die in der organischen Phase verblieb, und die Trimetaphosphatanionen, die zusammen mit Uran in die wässerige Sodaphase wanderten.

Bei der Durchführung der Gegenstromextraktion stellten sich in den wässerigen Sodaphasen der einzelnen Extraktionsstufen folgende Uran-Pegel ein, wobei der Zulauf der uranhaltigen organischen Phase in die Extraktionsstufe 1 und der Zulauf der anorganischen Sodaphase in die Extraktionsstufe 3 erfolgte:

nach 1. Extraktionsstufe 0,135 %
nach 2. Extraktionsstufe 0,0012%
nach 3. Extraktionsstufe 0,0002%
Die ablaufende filtrierte Sodaphase enthielt 0,158% $U_3O_8$.
Sie wurde durch Fällung mit NaOH auf ein Urankonzentrat weiterverarbeitet.

Beispiel 3

Eine Rohphosphorsäure, die aus geglühten Floridaphosphaten nach dem nassen Aufschlussverfahren hergestellt und von den Feststoffen durch Filtration befreit wurde, enthielt

25,0 % $P_2O_5$
1,9 % $H_2SO_4$
2,7 % HF
0,7 % Fe
0,012% U

In dieser Phosphorsäure wurde chargenweise durch eine einstufige Flüssig/Flüssig-Extraktion das vorhandene Uran abgereichert.

Das verwendete organische Lösungsmittel hatte die Zusammensetzung:

96,0% Petroläther Sdp. 70 °C
2,0% Oktanol
2,0% Triisodecylamin

In ein geschlossenes Extraktionsgefäss mit Rührwerk wurden 100 kg Rohphosphorsäure eingefüllt und mit einem festen, fein gepulverten Salzgemisch versetzt und unter Rühren in der Säure aufgelöst. Das Salzgemisch bestand aus

0,79 kg $Na_2SO_3$
0,35 kg Kurrol'schem Salz $(KPO_3)_n$
0,35 kg langkettiges Polyphosphat $(NaPO_3)_n$.

Nach dem Auflösen des Salzgemisches wurde die Phosphorsäure sofort mit 100 kg des Lösungsmittelgemisches versetzt und 15 Minuten lang intensiv gerührt. Danach wurde das Rührwerk stillgesetzt und die Phasen getrennt. Die schwere Phosphorsäurephase wurde in einen Sammeltank überführt und später auf andere Phosphorsäureprodukte weiterverarbeitet. Die extrahierte Phosphorsäure enthielt noch 4 ppm Uran gegenüber 120 ppm in der eingesetzten Säure. Dies entspricht einer Ausbeute von 97%.

Die uranhaltige Lösungsmittelphase wurde ebenfalls in einen Sammeltank überführt und von dort aus in einer dreistufigen Gegenstromextraktionsanlage mit einer 10%igen wässrigen Natronlauge behandelt. Das Alkylamin verblieb als freie Base in dem organischen Lösungsmittel. Das Polyphosphation wanderte zusammen mit dem Uran in die wässrige Natronlaugephase, wobei das Uran als gelbes Uranoxyd ausgefällt wurde.

Die Gegenstromextraktion wurde dreistufig im Phasenverhältnis von 1 : 10 wässrige NaOH-Phase/organische Phase (Gewichtsteile) durchgeführt.

Die organische Phase wurde nach Ablauf aus der Gegenstromextraktion auf ihre Zusammensetzung hin kontrolliert, nachgeschärft und erneut als Lösungsmittel in der einstufigen Phosphorsäureextraktion verwendet.

Aus der wässrigen NaOH-Lösung wurde das ausgefällte Uranoxyd durch Filtration abgetrennt.

Das NaOH-Filtrat konnte nach dem Nachstellen des NaOH-Gehaltes erneut in einem zweiten Extraktionszyklus in der Gegenstromextraktion verwendet werden.

Der erhaltene Filterkuchen wurde gewaschen und bei 200 °C getrocknet.

Es wurde ein Produkt erhalten, bei dem der $U_3O_8$-Gehalt 70,8% betrug.

Beispiel 4

Bei einem Laugungsprozess eines uranhaltigen Materials mit verdünnter reiner Phosphorsäure fiel eine filtrierte uranhaltige Phosphorsäurelösung mit

15,2 % $P_2O_5$
0,185% U
0,1 % Ca
0,1 % Mg
0,03 % Fe

an.

Diese Phosphorsäurelösung wurde mit so viel einer 10%igen wässrigen Lösung von $FeSO_4$ versetzt, bis der Fe-II-Gehalt in der Phosphorsäurelösung 0,3% betrug.

In einer hintereinandergeschalteten dreistufigen Mixer-Settler-Extraktionsapparatur wurde die uranhaltige Phosphorsäure im Gegenstrom mit einer organischen Lösungsmittelphase extrahiert.

Die organische Phase hatte die Zusammensetzung

80,2% Cyclohexan
10,0% Isodecanol
9,8% Dilaurylamintetrapolyphosphat

Die Gegenstromextraktion der Phosphorsäurelösung wurde im Phasenverhältnis 1 : 3 (Gewichtsteile) organische Phase zu anorganischer Phase betrieben.

Die eingespeisten Mengen betrugen:

anorganische Phase 3,0 kg/h
organische Phase 1,0 kg/h

Die Verweilzeiten der Phasen in den einzelnen Mixer-Settler-Stufen betrugen:

Mixer 20 Minuten
Settler 50 Minuten.

Die Arbeitstemperatur lag bei 30 °C.

Die organische Phase wurde in einer separaten Mixer-Settler-Apparatur kontinuierlich hergestellt, indem der rücklaufende nachgeschärfte Lösungsmittelstrom mit der freien Aminbase mit einer überschüssigen Menge an Tetrapolyphosphorsäure umgesetzt wurde, wobei die freie Polyphosphorsäure durch einen Ionenaustauschprozess hergestellt worden war. Dabei bildeten sich zwei Phasen aus, von denen die wässerige Phase die überschüssige Tetrapolyphosphorsäure enthielt und abgetrennt wurde.

Die aus der Gegenstromextraktionsapparatur ablaufende Phosphorsäure hatte einen Resturangehalt von 0,0015%. Die Ausbeute an extrahiertem Uran betrug 99%. Die uranabgereicherte Phosphorsäure wurde im Düngemittelsektor verarbeitet.

Die aus der Gegenstromextraktion ablaufende organische Phase enthielt das extrahierte Uran und das Extraktionsmittel. Sie wurde in eine zweite dreistufige Gegenstromextraktionsanlage überführt und dort mit einer wässrigen Lösung mit 15% $NH_4HCO_3$ und 3,5% $NH_3$ reextrahiert. Die Reextraktionsapparatur wird im Phasenverhältnis von 4 : 1 (Gewichtsteile) organische Phase zu anorganischer Phase betrieben. Bei dem Reextraktionsprozess wurde die Dilaurylamintetrapolyphosphatverbindung gespalten. Das Amin verblieb als freie Base in der organischen Lösungsmittelphase und wurde erneut mit einer wässrigen Tetrapolyphosphorsäurelösung umgesetzt.

Die ablaufende anorganische Phase hatte nach der Filtration einen Urangehalt von 2,05%. Durch Zufügen von weiteren $NH_3$-Mengen wurde das gelöste Uran als Ammoniumuranyltricarbonat ausgefüllt, abfiltriert und bei 1000 °C in $U_3O_8$ konvertiert.

Beispiel 5

Die bei einem chemisch-technischen Prozess als Nebenprodukt anfallende Phosphorsäurelösung war an Uran angereichert und enthielt

42,2 % $P_2O_5$
2,2 % $H_2SO_4$
0,36 % HF
0,54 % Fe
0,0715% U

In ein geschlossenes Gefäss mit Rührwerk wurden 300 kg der Phosphorsäurelösung eingefüllt und mit 5,5 kg festem Natriumsulfit versetzt. Unter leichtem Rühren wurde das Salz in der Säure aufgelöst. Das Rührgefäss diente als Säurevorlagetank für den Betrieb der Extraktionsapparatur.

Von diesem Phosphorsäurevorrat aus wurde über einen Zeitraum von 4 Tagen kontinuierlich eine sechsstufige Flüssig/Flüssig-Gegenstromextraktion zur Entfernung des Urans betrieben. Die Extraktionsanlage bestand aus einer hintereinandergeschalteten Mixer-Settler-Anordnung.

Die Gegenstromextraktionsanlage wurde mit einer Säuremenge von 2,9 kg/h gespeist. Die Gegenstromextraktionsanlage wurde im Phasenverhältnis 1 : 3 (Gewichtsteile) organische Phase zu anorganischer Phase betrieben.

Die eingespeiste Menge an organischer Phase betrug 0,97 kg/h.

Sie hatte die Zusammensetzung:

90,5% Cyclohexan
5,0% Isodecanol
4,5% Isotridecylaminpolyphosphat

Die organische Phase wurde aus einem Vorratstank entnommen.

Die aus der Gegenstromextraktionsapparatur ablaufende Phosphorsäure hatte einen Resturangehalt von 0,0015%. Die Ausbeute an extrahiertem Uran betrug 98%. Die uranabgereicherte Phosphorsäure wurde im Düngemittelsektor verarbeitet.

Die aus der Gegenstromextraktion ablaufende organische Phase enthielt das extrahierte Uran und das Extraktionsmittel. Sie wurde in eine zweite dreistufige Gegenstromextraktionsanlage überführt und dort mit einer wässerigen 10%igen NaOH-Lösung reextrahiert. Die Reextraktionsapparatur wurde im Phasenverhältnis von 4 : 1 (Gewichtsteile) organische Phase zu anorganischer Phase betrieben. Bei dem Reextraktionsprozess wurde die Isotridecylaminpolyphosphatverbindung gespalten. Das Amin verblieb als freie Base in der organischen Lösungsmittelphase. Die Amin-Lösungsmittelphase wurde in einem separaten Lagertank aufgefangen.

Aus der wässerigen NaOH-Lösung wurde das ausgefällte Uranoxyd durch Filtration abgetrennt. Das NaOH-Filtrat konnte nach dem Nachstellen des NaOH-Gehaltes erneut in einem zweiten Extraktionszyklus in der Gegenstromextraktion verwendet werden.

Der erhaltene Filterkuchen wurde gewaschen und bei 200 °C getrocknet.

**Patentansprüche**

1. Verfahren zur Gewinnung von Uran aus wässriger, Uran in gelöster Form enthaltender Phosphorsäure mit Hilfe von Aminen, gelöst in wasserunlöslichen organischen Lösungsmitteln, in Gegenwart von Komplexbildnern, dadurch gekennzeichnet, dass man die wässrige Phosphorsäure mit einer langkettigen Alkylamin-Polyphosphat- und/oder -Metaphosphat-Verbindung, gelöst in einem organischen Lösungsmittel, in Gegenwart von Fe-II-Ionen in Kontakt bringt, wobei das Alkylamin aus einem sekundären oder tertiären Alkylamin besteht und im Alkylrest 8 bis 30 C-Atome enthält und der Formel

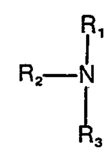

entspricht, wobei $R_1$ Wasserstoff oder Alkylradikale und $R_2$ und $R_3$ Alkylradikale bedeuten, der Polyphosphat- und/oder Metaphosphat-Rest 2 bis 10 000 P-Atome pro Molekül hat und geradekettig und/oder vernetztkettig bzw. ringförmig sein kann, und das Uran aus der wässrigen in die organische Phase überführt wird, aus der man das Uran reextrahiert.

2. Verfahren nach Anspruch 1, dadurch gekennzeichnet, dass man in der Phosphorsäure, in der Uran zusammen mit anderen Kationen und Fe-III-Ionen in gelöster Form enthalten ist, zunächst die Fe-III-Ionen durch reduzierende Stoffe in Fe-II-Ionen überführt.

3. Verfahren nach den Ansprüchen 1 und 2, dadurch gekennzeichnet, dass man als wässrige Phosphorsäure eine solche verwendet, die praktisch frei von organischen Verunreinigungen ist.

4. Verfahren nach den Ansprüchen 1 bis 3, dadurch gekennzeichnet, dass das verwendete Extraktionsmittel hergestellt worden ist durch Lösen von Polyphosphat und/oder Metaphosphat-Ionen in der zur Gewinnung von Uranverbindungen verwendeten wässrigen Phosphorsäure und Kontaktieren der wässrigen Phase mit einer organischen

Phase aus dem in einem organischen Lösungsmittel gelösten langkettigen sekundären oder tertiären Alkylamin.

## Claims

1. A process of recovering uranium from aqueous phosphoric acid which contains dissolved uranium with the aid of amines dissolved in water-insoluble organic solvents, in the presence of complexing agents, characterized in that the aqueous phosphoric acid is contacted in the presence of ferrous ions with a long-chain alkylamine polyphosphate compound and/or alkylamine metaphosphate compound, which is dissolved in an organic solvent, the alkylamine consists of a secondary or tertiary alkylamine and in its alkyl residue contains 8 to 30 carbon atoms and corresponds to the formula

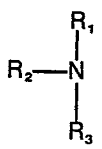

wherein $R_1$ represents hydrogen or alkyl radicals and $R_2$ and $R_3$ represent alkyl radicals, the polyphosphate and/or metaphosphate residue contains 2 to 10 000 phosphorus atoms per molecule and may consist of straight chains and/or cross-linked chains or ring chains, and the uranium is transformed from the aqueous phase into the organic phase, from which the uranium is re-extracted.

2. A process according to claim 1, characterized in that the phosphoric acid contains uranium together with other cations and with ferric ions in dissolved form and the ferric ions are first transformed by reducing substances to ferrous ions.

3. A process according to claims 1 and 2, characterized in that an aqueous phosphoric acid is used which is virtually free of organic impurities.

4. A process according to claims 1 to 3, characterized in that the extraction solvent which is employed has been made in that polyphosphate ions and/or metaphosphate ions are dissolved in the phosphoric acid that is used to recover uranium compounds and the aqueous phase is contacted with an organic phase consisting of the long-chain secondary or tertiary alkylamine dissolved in an organic solvent.

## Revendications

1. Procédé d'extraction d'uranium à partir d'acide phosphorique aqueux contenant l'uranium à l'état dissous au moyen d'amines dissoutes dans des solvants organiques insolubles dans l'eau, en présence d'agents complexants, caractérisé en ce qu'on met l'acide phosphorique aqueux en contact avec un polyphosphate et/ou un métaphosphate d'alkylamine à longue chaîne, dissous dans un solvant organique, en présence d'ions Fe-II, l'alkylamine étant constituée par une alkylamine secondaire ou tertiaire et contenant, dans le reste alkyle, 8 à 30 atomes de carbone et correspondant à la formule

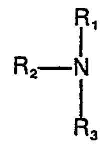

dans laquelle $R_1$ représente de l'hydrogène ou des radicaux alkyle et $R_2$ et $R_3$ représentent des radicaux alkyle, le reste polyphosphate et/ou métaphosphate comportant 2 à 10 000 atomes de phosphore par molécule et pouvant être linéaire et/ou ramifié ou cyclique, et en ce qu'on déplace l'uranium de la phase aqueuse dans la phase organique à partir de laquelle on réextrait l'uranium.

2. Procédé selon la revendication 1, caractérisé en ce que, dans l'acide phosphorique qui contient l'uranium avec d'autres cations et les ions Fe-III à l'état dissous, on transforme d'abord les ions Fe-III en ions Fe-II au moyen de substances réductrices.

3. Procédé selon les revendications 1 et 2, caractérisé en ce que'on utilise, comme acide phosphorique aqueux, un acide pratiquement exempt d'impuretés organiques.

4. Procédé selon les revendications 1 à 3, caractérisé en ce que l'agent d'extraction utilisé a été préparé par dissolution d'ions polyphosphate et/ou d'ions métaphosphate dans l'acide phosphorique aqueux utilisé pour l'obtention de composés d'uranium et par mise en contact de la phase aqueuse avec une phase organique constituée par l'alkylamine secondaire ou tertiaire à longue chaîne dissoute dans un solvant organique.